Europäisches Patentamt

European Patent Office

Office européen des brevets

(19)

(11) EP 0 911 608 A1

## (12) DEMANDE DE BREVET EUROPEEN

(43) Date de publication:
   28.04.1999 Bulletin 1999/17

(51) Int Cl.⁶: **G01C 22/02**, G01C 21/20, G01P 3/66, B61L 25/02

(21) Numéro de dépôt: 98402613.8

(22) Date de dépôt: 20.10.1998

(84) Etats contractants désignés:
   AT BE CH CY DE DK ES FI FR GB GR IE IT LI LU MC NL PT SE
   Etats d'extension désignés:
   AL LT LV MK RO SI

(30) Priorité: 21.10.1997 FR 9713164

(71) Demandeur: THOMSON-CSF
   75008 Paris (FR)

(72) Inventeur: **Guyvarch, Jean-Paul**
   **94117 Arcueil Cedex (FR)**

(74) Mandataire: **Chaverneff, Vladimir et al**
   **Thomson-CSF Propriété Intellectuelle,**
   **13, Avenue du Président Salvador Allende**
   **94117 Arcueil Cédex (FR)**

### (54) Procédé et dispositif de localisation et/ou de mesure de vitesse de vehicules

(57) Ce procédé consiste essentiellement à détecter à bord d'un train parcourant une voie ferrée, à l'aide d'un capteur radiométrique hyperfréquences passif, des obstacles, tels que ponts, tunnels et bâtiments proches de la voie, ces obstacles présentant, en hyperfréquences, un fort contraste thermique avec le fond environnant (terre ou ciel), les emplacements exacts de ces obstacles étant mémorisés à bord du train. Grâce à l'odomètre du train, on ouvre une fenêtre temporelle peu avant l'emplacement estimé de chaque obstacle. La comparaison avec les indications fournies par le capteur permettent de recaler l'odomètre, dont la précision est ainsi nettement améliorée.

EP 0 911 608 A1

**Description**

La présente invention se rapporte à un procédé de localisation et/ou de mesure de vitesse de véhicules, et à un dispositif de mise en oeuvre.

Il est important de connaître à chaque instant avec une bonne précision la position des trains sur le réseau ferré. Cela peut notamment être utile en cas de panne, ou pour faire passer des trains en sens opposés sur des tronçons à voie unique, ou encore pour les futurs trains de type pendulaire afin d'anticiper les courbes.

Pour répondre à ce besoin, les sociétés d'exploitation de chemins de fer ne disposent aujourd'hui que de capteurs de tours de roue offrant une précision de quelques pour mille. Des radars odométriques ont également été étudiés ; ils devraient permettre d'améliorer cette précision (environ un pour mille).

Ce résultat demeure toutefois insuffisant car l'erreur est encore de 500 m après 500 km de marche. L'objectif à atteindre serait en fait une erreur en permanence inférieure à 10 m.

Cet objectif peut être atteint en disposant à intervalles réguliers des balises de recalage (émission d'un signal particulier) près des voies ferrées. Les inconvénients sont bien sûr le coût des équipements (qui doivent être fiabilisés à l'extrême), le coût d'installation et de maintenance.

Pour connaître à tout moment la position de véhicules, en particulier d'aéronefs, on utilise des récepteurs GPS coopérant avec un réseau de satellites. Toutefois, il faut pour cela que les récepteurs GPS puissent capter les signaux de ces satellites, ce qui est impossible dans les tunnels et les vallées très encaissées des montagnes. De plus, la précision de localisation reste limitée à quelques centaines de mètres pour les applications civiles.

Par ailleurs, on connaît des systèmes permettant de se localiser par rapport à des éléments remarquables de la route ou de la voie, par exemple les ponts. Pour détecter ces éléments, divers types de techniques ont été proposées :

- détecter l'affaiblissement des ondes radio (demande de brevet Philips EP 0 605 926 A)
- détecter les variations de niveau d'un signal GPS et/ou d'un champ géomagnétique (demande de brevet Zexel WO 94 16504A)
- utiliser des capteurs optiques, acoustiques ou Radar (demande de brevet Bosch DE 42 17 555A).

La présente invention a pour objet un procédé permettant de connaître en permanence, avec une très bonne précision (nettement meilleure que un pour mille) la position de véhicules, et le cas échéant, leur vitesse, sans nécessiter l'implantation sur leur parcours de dispositifs spécifiques, tels que des balises, et qui soit facile à mettre en oeuvre.

La présente invention a également pour objet un dispositif de mise en oeuvre de ce procédé, dispositif qui soit le moins onéreux possible, implantable sur différents types de véhicules, et qui puisse fonctionner correctement par tous temps.

Le procédé de localisation précise d'un véhicule de l'invention, ce véhicule étant muni d'au moins un capteur relié à des circuits de traitement de son signal, procédé selon lequel on dirige le capteur dans une direction sensiblement perpendiculaire à la surface principale d'obstacles proches de la voie suivie par le véhicule et dont les positions géographiques sont connues avec précision et mémorisées à bord du véhicule, ces obstacles étant situés à des intervalles beaucoup plus courts que la longueur du trajet le long duquel on veut déterminer la position du véhicule, et selon lequel lorsque le capteur détecte une de ces surfaces, les circuits de traitement prennent en compte cette détection si le contraste dépasse un seuil déterminé, et dans l'affirmative, recherchent en mémoire la position exacte de l'obstacle, cette position étant ainsi trouvée, elle est affichée dans le véhicule, ou utilisée pour un traitement ultérieur (télétransmission à un poste de commande, statistiques, annonces aux voyageurs...), et ce procédé est caractérisé en ce que le capteur est un capteur radiométrique fonctionnant en ondes hyperfréquences, et que ce capteur détecte lesdites surfaces principales principales par détection du contraste de température en hyperfréquences par rapport à la température du fond environnant.

De façon avantageuse, avant la première mise en oeuvre du procédé de l'invention, on procède sur un véhicule-laboratoire à au moins un parcours d'apprentissage avec le même capteur, afin de fiabiliser la détection des obstacles.

La présente invention utilise également la détection d'éléments remarquables de l'infrastructure, notamment les ponts enjambant les voies. Elle est caractérisée par l'emploi pour ce faire d'un capteur radiométrique en ondes hyperfréquences. Par rapport aux trois documents cités ci-dessus, ses principaux avantages sont les suivants :

- comparé aux capteurs qui détectent l'affaiblissement d'ondes radio ou GPS, le capteur proposé est plus robuste car non perturbé par les aléas de propagation en présence de relief accidenté ou en fonction des conditions météorologiques. Il est en outre beaucoup plus précis (quelques centimètres) ce qui lui permet en plus une évaluation de la vitesse du véhicule, connaissant la largeur de l'élément de recalage (pont par exemple) ;
- comparé aux mesures de variations du champ magnétique, le capteur proposé offre également une précision bien meilleure et n'est pas perturbé par la présence de masses métalliques importantes (par exemple, un camion stationnant à proximité du point de recalage) ;
- par rapport aux capteurs optroniques, le principal avantage est une plus grande robustesse vis-à-vis des conditions météorologiques et des problèmes inhérents aux salissures des optiques ;

- par rapport aux capteurs Radar, il a l'avantage d'être purement passif (pas de problème de couplage mutuel entre capteurs) et d'utiliser des signaux beaucoup plus reproductibles dans le temps (pas de problème de scintillation). Enfin, le coût du capteur est plus faible (pas d'émetteur, pas de dispositif de mesure de distance et/ou de fréquence Doppler, emploi éventuel d'une détection directe, c'est-à-dire sans changement de fréquence.

La présente invention est décrite ci-dessous en référence à l'utilisation à bord d'un train, mais il est bien entendu qu'elle peut être mise en oeuvre pour d'autres véhicules ne circulant pas nécessairement sur une voie ferrée, comme par exemple des autobus, ou même des voitures particulières ne suivant pas nécessairement un trajet fixe. Il suffit, pour pouvoir mettre en oeuvre l'invention, que le trajet suivi par les véhicules comporte, à des intervalles beaucoup plus courts (cent fois ou davantage par exemple) que la longueur du trajet que doivent parcourir ces véhicules, des « obstacles » pouvant être repérés à coup sûr par des capteurs. Ces obstacles sont, de préférence, des obstacles comportant une surface sensiblement plane située soit au-dessus du trajet des véhicules, en particulier des ouvrages d'art tels que des ponts ou des tunnels, soit latéralement, comme par exemple celle des bâtiments ou de constructions particulières très proches de la voie suivie par les véhicules (postes d'aiguillage, postes transformateurs, hangars ou barrières de passages à niveau...). Dans le cas où le trajet ne comporte pas de tels ouvrages sur une section importante, on peut en implanter sur cette section à des intervalles, réguliers ou non, assez grands (par exemple 5 à 10 km). Du fait que ces ouvrages sont « passifs » du point de vue radioélectrique (ils ne comportent aucun composant électronique), leur implantation et leur entretien sur une telle section sont peu onéreux.

Pour que ces obstacles puissent être repérés à coup sûr par des capteurs, l'invention prévoit d'utiliser des capteurs radiométriques. De tels capteurs, fonctionnant en ondes centimétriques ou millimétriques, détectent en fait un contraste de « température » suffisant, dans ces longueurs d'onde, entre lesdits obstacles et le fond environnant (ciel ou terre selon l'orientation des surfaces), et ce, quelles que soient les conditions météorologiques et l'heure d'observation.

Pour pouvoir détecter des obstacles « à surface horizontale » du type précité, l'invention prévoit de disposer à bord de chaque véhicule à équiper au moins un capteur radiométrique pointé à peu près au zénith, par exemple selon un angle d'environ 10° avec la verticale, ce qui lui permet de détecter avec une grande précision le début de ladite surface horizontale (qui est, par exemple la face inférieure d'un tablier de pont), qui présente un contraste de température important (100°K ou plus) avec le ciel au zénith, qui est nettement plus « froid » aux fréquences utilisées, quelles que soient les conditions météorologiques. A cet effet, on fixe par exemple sur le toit du véhicule ou derrière son pare-brise une petite antenne fixe faisant office de capteur passif hyperfréquences, cette antenne étant associée à un récepteur approprié. Cette antenne peut être réalisée de toute façon appropriée : antenne plate, antenne comet, parabole La précision de localisation de ce début de surface horizontale peut être de l'ordre de quelques centimètres, en particulier grâce au fait que l'angle d'ouverture du lobe de l'antenne peut être faible (quelques degrés) et que ces obstacles sont proches de l'antenne.

Dans le cas où le véhicule en question est un train à traction électrique, le capteur est relativement peu perturbé par les caténaires et leurs supports, du fait de la faible surface de ceux-ci « vue » par le capteur, alors que les autres obstacles, tels que les ponts, présentent une surface « chaude » beaucoup plus grande.

Par ailleurs, la fréquence de ces ponts sur le trajet des voies ferrées récentes, telles que les lignes de TGV françaises, peut être largement suffisante (environ un pont tous les 3 à 4 km en moyenne) pour permettre un recalage de position satisfaisant, sans nécessiter la recherche d'autres genres d'obstacles. Par contre, dans le cas de voies ferrées plus anciennes, pour lesquelles les croisements avec les routes se font en grande partie à l'aide de passages à niveau, il faut rechercher d'autres types d'obstacles puisque les ponts sont alors beaucoup plus espacés. De façon avantageuse, ces obstacles peuvent être les barrières des passages à niveau. Généralement, ces barrières sont longues de plusieurs mètres et ont un diamètre proche de 10 cm. Dans ce cas, l'antenne du radiomètre doit être orientée latéralement ou vers le bas, dans la direction moyenne de ces barrières. Une telle barrière réfléchit le ciel (« froid ») et apparaît donc en contraste négatif par rapport au sol « chaud ».

Dans le cas des voies ferrées, pour lesquelles les ponts et/ou les barrières de passages à niveau se présentent à une fréquence insuffisante, ou bien dans le cas de véhicules routiers, ou de bateaux de navigation fluviale, circulant sur des voies croisant peu de ponts ou pas du tout, on peut se servir d'autres obstacles proches de ces voies: bâtiments, clôtures, pylônes ... ou des obstacles naturels : rochers, grands arbres, ou bien même on peut disposer des obstacles spécifiques tels que des plaques de dimensions suffisantes le long de ces voies.

Selon une caractéristique avantageuse de l'invention, avant la mise en service des capteurs, on fait parcourir le trajet plusieurs fois, pour différentes conditions météorologiques, par une véhicule-laboratoire équipé de ces mêmes capteurs. On relève les informations de détection fournies par ces capteurs, et ne retient que celles correspondant à des obstacles sûrs (en éliminant par exemple celles dues à des véhicules, à des portiques de caténaires ou celles ne fournissant pas un résultat répétitif, par exemple par suite de variations d'ensoleillement, ou d'heure de mesure ou de conditions climatiques variant d'une mesure à l'autre). Les informations retenues sont mémorisées avec les coordonnées géographiques des obstacles correspondants, pour former une base de données de référence, qui est ensuite mise en mémoire à bord de tous les véhicules suivant le même trajet ou la même partie de trajet. Il suffit alors d'effectuer à bord de ces véhicules une corrélation entre cette base de données et les informations fournies par leurs propres capteurs pour pouvoir éliminer à coup sûr les informations erronées fournies par les capteurs en phase d'exploitation normale du véhicule. Ces informations erronées peuvent provenir d'obstacles non répertoriés dans la base de données : caténaires, véhicules, artefacts dus à des conditions météorologiques diverses... Pour mettre en oeuvre cette corrélation, les informations en provenance du (ou des) capteur (s) sont inhibées dans les intervalles de trajet dans lesquels la base de données ne comporte aucun obstacle « sûr ». A l'approche d'un obstacle répertorié, on ouvre une « fenêtre » temporelle. La localisation de cet obstacle est estimée à partir du dispositif indicateur de position du véhicule, généralement appelé « odomètre » et équipant le véhicule, le temps d'ouverture de la fenêtre tenant compte de l'imprécision de l'odomètre. Il faut toutefois noter que cette imprécision, même si elle est relativement importante en l'absence de mise en oeuvre du procédé de l'invention, devient tolérable ou même négligeable grâce au recalage fréquent produit par le procédé de l'invention. Toutefois, il est bien entendu que l'invention peut s'appliquer à des véhicules sans odomètre. Dans ce cas, on effectue des mesures de vitesse (réalisées comme décrit ci-dessous) à partir du point de départ du véhicule, ce qui permet, connaissant les laps de temps séparant deux mesures de vitesse successives, de déterminer, au moins approximativement, la distance séparant les endroits où ont été faites ces mesures de vitesse. A cet effet, les obstacles sont, de préférence, plus rapprochés les uns des autres, et si nécessaire, des obstacles artificiels peuvent être ajoutés. Entre deux mesures successives de vitesse, si cette vitesse est sensiblement constante, un compteur électronique peut afficher une position interpolée du véhicule, en indiquant, de toute façon appropriée, que cette position est approximative, alors qu'elle est exacte au passage des obstacles.

Selon un aspect avantageux du procédé de l'invention, on peut effectuer des mesures de vitesse de très bonne précision. A cet effet, on dispose sur le véhicule deux capteurs radiométriques identiques, séparés d'une distance mesurée au préalable avec une grande précision. Pour déterminer la vitesse du véhicule, il suffit de mesurer l'intervalle de temps séparant la détection d'un même obstacle par chacun de ces deux capteurs. Connaissant la distance séparant ces deux capteurs, on en déduit très simplement la vitesse du véhicule. On remarquera qu'il n'est pas nécessaire que cet obstacle fasse partie de ceux répertoriés dans ladite base de données. En effet, étant donné la vitesse du véhicule et la distance des deux capteurs, l'intervalle de temps séparant la détection d'un même obstacle par ces deux capteurs est généralement très court, ce qui fait que les conditions de détection d'un même obstacle ne varient pratiquement pas entre les détections de ces deux capteurs. Il est ainsi possible de détecter des obstacles présentant un moindre contraste thermique avec le fond environnant que dans le cas de l'utilisation d'un seul capteur, du fait que la corrélation des informations fournies par les deux capteurs est élevée.

De façon générale, la précision de mesure dépend des paramètres suivants :

- la sensibilité du (des) radiomètre (s)
- la largeur du faisceau d'antenne
- la cadence de mesure (nombre d'obstacles par unité de longueur de trajet)
- le contraste thermique des obstacles (qui dépend de leur nature et des conditions météorologiques)
- l'emplacement du (des) capteur (s) sur les véhicules
- la vitesse des véhicules.

La sensibilité $\Delta$Tmin des radiomètres est donnée par la formule approchée suivante :

$$\Delta\text{Tmin} = \text{Tsys} \left( B_{HF} \cdot \tau_i \right)^{-\frac{1}{2}}$$

avec Tsys = Trec + Tfond
Trec étant la température de bruit du récepteur auquel sont reliés les capteurs.
Tfond étant la température radiométrique du fond
$B_{HF}$ étant la largeur de la bande hyperfréquence du récepteur
$\tau_i$ étant le temps d'intégration de la mesure.

Dans l'état actuel de la technologie, les températures de bruit typiques des récepteurs sont les suivantes: à 16 Ghz, - $T_{rec} \approx 200°$ K et à 94 Ghz : $T_{rec} \approx 900°$ K.

La température du fond dépend de sa nature (ciel ou terre), de l'incidence moyenne de visée des capteurs, des conditions météorologiques et de la fréquence considérée. A titre d'exemple, on peut consulter le chapitre 39 du livre « Radar Handbook», publié sous la direction de M. SKOLNIK aux Editions Mc Graw-Hill Book Company. Dans cet ouvrage, on trouve plusieurs diagrammes permettant de déterminer la température du fond de ciel à différentes longueurs d'onde, pour des angles d'incidence variables et pour des conditions météorologiques différentes. Ainsi, par exemple, au zénith on a : à 16 Ghz : $T_{fond} \approx 30°$ K et à 94 Ghz : $T_{fond} \approx 100°$ K pour un temps nuageux. Pour un fond de sol majoritairement constitué de végétation, on a $T_{fond} \approx 300°$K

par temps sec. La bande hyperfréquence que l'on peut obtenir dépend également de la fréquence ; par exemple, on a relevé les valeurs typiques suivantes : à 16 Ghz : $B_{HF}$ = 1 Ghz et à 94 Ghz, $B_{HF}$ = 5 Ghz, mais il est bien entendu que l'on peut obtenir des valeurs supérieures avec d'autres appareils. Le temps d'intégration $\tau_i$ doit alors être choisi de façon à assurer une sensibilité suffisante au radiomètre; quelles que soient les conditions météorologiques. On peut admettre qu'une sensibilité $\Delta_{Tmin}$ = 1° K est suffisante. De la relation approchée citée ci-dessus, on tire :

$$\tau_i = {}_{(Tsys}/\Delta_{Tmin})^2/B_{HF}$$

On obtient alors, pour les valeurs citées ci-dessus à titre d'exemple, pour $\tau_i$ ;

à 16 Ghz : $\tau_i$ = 0,1 ms pour un fond de ciel
et $\tau_i$ = 0,3 ms pour un fond de sol
et à 94 Ghz : $\tau_i$ = 0,2 ms pour un fond de ciel
et $\tau_i$ = 0,3 ms pour un fond de sol.

Le temps d'intégration $\tau_i$ correspond à la plus faible cadence d'échantillonnage possible des mesures. Si $\upsilon$ est la vitesse du véhicule, l'écart type de l'erreur de localisation lié à l'échantillonnage est donné par :

$$\sigma e = (1/\sqrt{12}).\upsilon.\tau_i$$

Dans le cas où le véhicule est un train à grande vitesse (TGV), pour lequel $\upsilon$ = 100 m/s par exemple, on a :

$$3.10^{-3}m < \sigma e < 9.10^{-3}m$$

D'autre part, les transitions de température entre le fond (ciel ou sol) et les surfaces des obstacles mesurées par le capteur sont lissées à cause de la relativement grande largeur du diagramme d'antenne de ce capteur. Si on a, par exemple, une antenne d'un diamètre de 10 cm, la largeur du lobe à 3 dB est environ de 13° à 16 GHZ et de 2,2° à 94 Ghz. Si une telle antenne est à 3 m de l'obstacle, la zone d'incertitude en distance, c'est-à-dire sa résolution est d'environ 0,7 m à 16 Ghz et de 0,12 m à 94 Ghz.

Pour un rapport signal/bruit supérieur à 20 dB (soit un contraste supérieur à 100°K, pour une sensibilité de 1°K), on peut admettre que la précision de mesure est d'environ 1/10 des valeurs mentionnées ci-dessus pour la détection des transitions de température. Ainsi, pour les exemples précités, à 16 Ghz, l'erreur liée au lobe d'antenne reste prépondérante (1/10 de 0,7 m environ, soit environ 7 cm), alors qu'à 94 Ghz, elle est du même ordre que celle résultant de l'échantillonnage (1/10 de 0,12 m environ, soit environ 1 cm).

Dans tous les cas, la précision obtenue au moment du recalage de position selon l'invention est bien meilleure que l'objectif cité en préambule (erreur inférieure à 10 m).

Entre deux recalages, la position du véhicule est extrapolée à l'aide de son odomètre. Ainsi, 1 km après le recalage, l'erreur de mesure est, par exemple d'environ 3 m pour un odomètre ayant une précision de 3 pour mille (l'erreur de recalage, qui est de quelques centimètres, est négligeable), alors que si l'odomètre n'était pas recalé, l'erreur pourrait être de 1 500 m après un trajet de 500 km.

On peut également déduire de ces considérations la précision d'une mesure de vitesse, d'un train par exemple, effectuée en utilisant deux radiomètres orientés de la même façon et écartés d'une distance d (suivant l'axe du train) :

- si l'écart type de mesure de distance résultant de la corrélation entre les deux radiomètres est $\sigma r$, si v est la vitesse du train et si $\sigma d$ est l'écart type sur la mesure de d, l'écart type de l'estimation de la vitesse sera : $\sigma v = (v/d) (\sigma r^2 + \sigma d^2)^{1/2}$

Cela suppose bien entendu que v est constante pendant l'intervalle de temps $\Delta t$ séparant les deux mesures (on mesure en fait une vitesse moyenne pendant cet intervalle de temps), augmenté de la durée de la séquence de corrélation (par exemple du même ordre que $\Delta t$).

On peut supposer que $\sigma r$ et $\sigma d$ sont du même ordre car, si d peut être mesuré avec une grande précision (le train étant à l'arrêt en gare par exemple), les axes de visée ne seront harmonisés qu'à environ 1/10ème de la largeur du lobe.

En prenant d = 100 m et $\sigma r = \sigma d$ = 0,012 m, on obtient $\sigma v/v$ = 0,2 $10^{-3}$.

Il convient de remarquer que, dans les courbes, cette mesure vitesse n'est pas biaisée.

En fait, dans la pratique, le principal problème vient des mouvements parasites de louvoiement du train qui pourront légèrement modifier les conditions relatives de visée des deux capteurs (surtout pour une visée latérale). Sur un train classique, on monte de façon avantageuse les capteurs aux deux extrémités d'une même motrice, ce qui minimise ce problème et de surcroît simplifie les problèmes de liaison entre les deux capteurs (par contre d sera réduit d'autant). Sur un TGV, la rame est beaucoup plus rigide et les capteurs peuvent même être montés aux deux extrémités d'une rame.

Dans tous les cas, la précision des mesures peut être améliorée dans de grandes proportions (en diminuant les bruits de mesure) par filtrage, en particulier par filtrage de Kalman. La précision indiquée précédemment correspond en effet à une mesure instantanée (à la fenêtre de corrélation près).

La robustesse du procédé de mesure de l'invention provient tout d'abord du type de capteur utilisé :

- par rapport à un capteur infrarouge passif, le capteur radiométrique en ondes hyperfréquences est beaucoup moins sensible aux conditions météorologiques et ne nécessite pas un entretien aussi méticuleux (problème de salissure des optiques en infrarouge). De ce point de vue, le choix d'une bande centimétrique est généralement encore plus favorable que celui d'une bande millimétrique ;

- par rapport à un capteur actif (radar ou laser), les signaux sont beaucoup plus lissés et plus déterministes. En effet, en mode actif, certains objets peuvent présenter un écho dont l'intensité varie très rapidement en fonction de l'angle d'observation. C'est notamment le cas des structures métalliques diverses surplombant la voie, des clôtures, etc...

Le mode passif de l'invention ne présente pas cet inconvénient car le rayonnement est diffus et intégré sur une bande beaucoup plus large.

Le deuxième élément concourant à la robustesse du procédé de l'invention, est l'excellente complémentarité avec les odomètres équipant déjà les locomotives. Ils permettent en effet de réduire considérablement la durée nécessaire à la fenêtre de corrélation, limitant ainsi le risque d'ambiguïtés.

Par ailleurs, les objets (ponts, barrières...) utilisés comme obstacles de recalage sont situés aléatoirement le long de la voie. La fonction d'autocorrélation de cette séquence est donc elle même non ambiguë.

Pour pouvoir bénéficier à la fois du recalage de position zénithal (tabliers de ponts), latéral (amers le long de la voie), et du recalage de vitesse, il est nécessaire de disposer quatre capteurs radiométriques reliés à un calculateur commun, tel qu'un micro-ordinateur classique (de type PC par exemple). Sur une rame de TGV, deux capteurs sont disposés à chaque extrémité, avec des angles de visée vers le haut et latéralement. L'emplacement précis est déterminé en fonction des autres contraintes propres au TGV.

Pour la liaison entre capteurs avant et arrière, on s'efforcera dans la mesure du possible d'utiliser les liaisons déjà existantes (la bande passante nécessaire n'est que de quelques kHz, compatible de liaisons audiofréquences existantes).

En ce qui concerne les capteurs latéraux, il faut signaler la dissymétrie gauche-droite liée au sens de marche du train (réversible) ; de ce fait, les capteurs visent soit le bord immédiat de la voie (capteur visant à gauche du sens de marche), soit de côté opposé de la voie (capteur visant à droite du sens de marche).

Pour remédier à ce problème, il est nécessaire de réaliser des séquences d'apprentissage (choix d'obstacles) des deux côtés de la voie, l'idéal étant en fait une configuration à 6 capteurs (deux capteurs latéraux et un capteur zénithal à chaque extrémité). Compte tenu du prix très bas des capteurs radiométriques, cette dernière configuration est la plus intéressante.

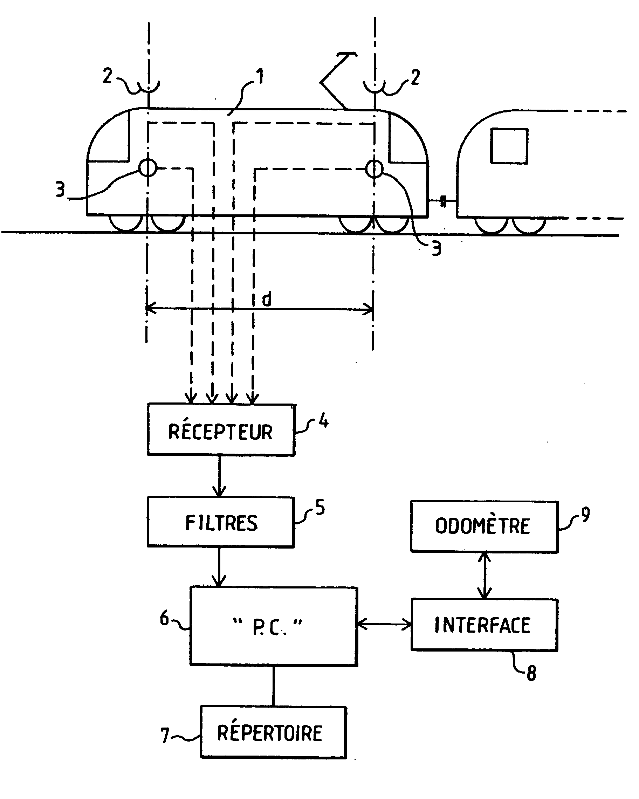

On a représenté, de façon très simplifiée, sur la figure unique du dessin, le bloc-diagramme d'un mode de réalisation d'un dispositif de recalage de position et de mesure de vitesse conforme à l'invention, dans le cas où le véhicule est en train. Ce mode de réalisation permet de réaliser des mesures aussi bien avec des obstacles zénithaux tels que des ponts et des tunnels qu'avec des obstacles latéraux tels que des barrières de passages à niveau et des bâtiments proches de la voie ferrée. A cet effet, la motrice 1 du train est équipée à chacune de ses deux extrémités de trois capteurs : un capteur 2 est fixé sur son toit et deux capteurs latéraux 3, seuls les deux capteurs latéraux fixés sur son côté visible sur le dessin étant représentés. Tous ces six capteurs sont des antennes réceptrices hyperfréquences du type précité. Ces capteurs sont reliés à un récepteur 4, lui-même relié par des filtres 5 à un micro-ordinateur 6, par exemple un « PC ». Le micro-ordinateur 6 est relié à une mémoire 7 dans laquelle sont mémorisées les données relatives au trajet que doit parcourir le train. Ces données sont les distances des obstacles successifs le long du trajet, depuis l'origine de ce trajet, c'est-à-dire la gare de départ du train (ou éventuellement sa gare terminus, et dans ce cas ces distances vont en décroissant, l'odomètre fonctionnant alors en décompteur). Ces informations de distance peuvent éventuellement être complétées par d'autres informations, par exemple: nature des obstacles (obstacles zénithaux ou latéraux), amplitude moyenne du contraste thermique des obstacles en fonction de la température extérieure, de l'ensoleillement, de l'heure et de la saison, ... longueur des obstacles mesurée le long du trajet des faisceaux des capteurs, etc... Le micro-ordinateur 6 est relié par ailleurs via une interface bidirectionnelle appropriée 8 à l'odomètre 9 du train. Bien entendu, les éléments 4 à 9 sont disposés à bord du train.

Le programme d'exploitation des capteurs 1 à 3 mémorisé dans le micro-ordinateur 6 est évident à réaliser pour l'homme de l'art à la lecture de la présente description. On notera simplement que ce programme contient, entre autres, une fonction de comparaison et de fenêtrage, pour discriminer les signaux parasites. La fonction de fenêtrage ouvre une fenêtre temporelle peu avant l'emplacement estimé des vrais obstacles, d'après les indications de l'odomètre 9. La fonction de comparaison permet de comparer à un seuil les signaux reçus des filtres 5, et éventuellement de comparer ces signaux à un gabarit de forme (raideur de la caractéristique de transition entre le fond et la surface « froide » ou « chaude » de l'obstacle et distance entre cette transition et la transition de cette surface vers le fond).

Le programme du micro-ordinateur comporte également une fonction de calcul de vitesse à partir des indications de deux capteurs distants.

**Revendications**

1.   Procédé de localisation précise d'un véhicule, ce véhicule (1) étant muni d'au moins un capteur relié à des circuits de traitement (4 à 7) de son signal, procédé selon lequel on dirige le capteur dans une direction sensiblement perpendiculaire à la surface principale d'obstacles proches de la voie suivie par le véhicule et dont les positions géographiques sont connues avec précision et mémorisées (7) à bord du véhicule, ces obstacles étant situés à des intervalles beaucoup plus courts que la longueur du trajet le long duquel on veut déterminer la position du véhicule, et selon lequel lorsque le capteur détecte une de ces surfaces principales, les circuits de traitement prennent en compte cette détection si le contraste dépasse un seuil déterminé, et dans l'affirmative, recherchent en mémoire la position exacte de l'obstacle, cette position étant ainsi trouvée, elle est affichée dans le véhicule, et/ou utilisée pour un traitement ultérieur caractérisé en ce que le capteur est un capteur radiométrique (2,3) fonctionnant en hyperfréquences et que ce capteur détecte lesdites surfaces principales par détection du contraste de température en hyperfréquences par rapport à la température du fond environnant.

2. Procédé selon la revendication 1, appliqué à un véhicule comportant un odomètre, caractérisé en ce que l'odomètre est utilisé pour rechercher en mémoire les positions exactes des obstacles correspondant au mieux à ses indications, et que lorsqu'une position est trouvée, l'odomètre est recalé si nécessaire.

3. Procédé selon la revendication 1 ou 2, caractérisé en ce qu'avant la première mise en oeuvre du procédé de l'invention, on procède sur un véhicule-laboratoire à au moins un parcours d'apprentissage avec le même capteur, afin de fiabiliser la détection des obstacles.

4. Procédé selon la revendication 1, 2 ou 3, caractérisé en ce que l'on mesure également la vitesse du véhicule en le munissant d'au moins un autre capteur (2, 3) identique au premier, orienté de la même façon et éloigné de celui-ci d'une distance fixe connue (d), et que lorsqu'un même obstacle a été détecté par deux capteurs distants, on calcule la vitesse du véhicule, connaissant la distance séparant les capteurs et le laps de temps séparant les deux détections.

5. Procédé selon l'une des revendications précédentes, caractérisé en ce que les obstacles font partie de l'une au moins des catégories suivantes: ponts ou tunnels surplombant le trajet, bâtiments bordant le trajet, barrières de passages à niveau, rochers, obstacles artificiels.

6. Dispositif de localisation précise d'un véhicule (1), caractérisé en ce qu'il comporte au moins un capteur radiométrique hyperfréquences (2, 3), un circuit de traitement (4 à 6) et une mémoire (7) dans laquelle sont mémorisés les emplacements exacts des obstacles.

7. Dispositif selon la revendication 1, le véhicule comportant un odomètre, caractérisé en ce que le circuit de traitement est relié à l'odomètre par une interface bidirectionnelle.

**Office européen des brevets**

# RAPPORT DE RECHERCHE EUROPEENNE

Numéro de la demande

EP 98 40 2613

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | FR 2 592 621 A (SNCF) 10 juillet 1987<br>* page 6, ligne 28 - ligne 32; revendications * | 1,3-6 | G01C22/02<br>G01C21/20<br>G01P3/66<br>B61L25/02 |
| Y | US 4 131 891 A (STAVIS GUS)<br>26 décembre 1978<br>* abrégé * | 1,3-6 | |
| D,A | EP 0 605 926 A (PHILIPS ELECTRONICS NV)<br>13 juillet 1994<br>* colonne 2, ligne 18 - ligne 41 *<br>* colonne 4, ligne 8 - ligne 52 * | 1-3,5,6 | |
| D,A | WO 94 16504 A (ZEXEL CORP ;ZEXEL USA CORP (US)) 21 juillet 1994<br>* abrégé; revendications 1-5 * | 1,2,5,6 | |
| D,A | DE 42 17 555 A (BOSCH GMBH ROBERT)<br>2 décembre 1993<br>* colonne 2, ligne 62 - colonne 4, ligne 19 * | 1,2,5,6 | |

DOMAINES TECHNIQUES RECHERCHES (Int.Cl.6)

G01C
G01P
B61L
G01K

Le présent rapport a été établi pour toutes les revendications

| Lieu de la recherche | Date d'achèvement de la recherche | Examinateur |
|---|---|---|
| LA HAYE | 25 janvier 1999 | Hoekstra, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 98 40 2613

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-01-1999

| Document brevet cité au rapport de recherche | | Date de publication | Membre(s) de la famille de brevet(s) | | Date de publication |
|---|---|---|---|---|---|
| FR 2592621 | A | 10-07-1987 | CA | 1274306 A | 18-09-1990 |
| | | | EP | 0234959 A | 02-09-1987 |
| | | | WO | 8704127 A | 16-07-1987 |
| | | | JP | 63502299 T | 01-09-1988 |
| | | | US | 4863123 A | 05-09-1989 |
| US 4131891 | A | 26-12-1978 | AUCUN | | |
| EP 0605926 | A | 13-07-1994 | JP | 6236500 A | 23-08-1994 |
| WO 9416504 | A | 21-07-1994 | US | 5374933 A | 20-12-1994 |
| | | | AU | 683240 B | 06-11-1997 |
| | | | AU | 5990394 A | 15-08-1994 |
| | | | CA | 2150942 A | 21-07-1994 |
| | | | EP | 0678228 A | 25-10-1995 |
| | | | JP | 8502827 T | 26-03-1996 |
| DE 4217555 | A | 02-12-1993 | AUCUN | | |

EPO FORM P0460

Pour tout renseignement concernant cette annexe : voir Journal Officiel de l'Office européen des brevets, No.12/82